# EUROPEAN PATENT APPLICATION

(11) **EP 4 756 979 A1**
(43) Date of publication of application: **10.06.2026**
(21) Application number: 24217017.3
(22) Date of filing: 03.12.2024
(51) Int. Cl.: H01M 10/42, H01M 50/209, H01M 50/325, H01M 50/358, H01M 50/505

(54) **BATTERY SYSTEM WITH MEASURES AGAINST PARTICLE DEPOSITION ON CRITICAL SECTIONS DURING THERMAL RUNAWAY**

(71) Applicant: SAMSUNG SDI CO., LTD., Yongin-si, Gyeonggi-do 17084 (KR)
(72) Inventor: Reinprecht, Wolfgang, 8144 Attendorf (AT); Haring, Fritz, 8600 Bruck an der Mur (AT)
(74) Representative: Gulde & Partner

(57) **Abstract**

The present disclosure refers to a battery module being equipped with a protection means that provides for a protection of the spaces at the ends of the battery module, which are typically used for accommodating high voltage interfaces and other electric wirings prone to short circuits and arcing upon particle deposition in the case of a thermal runaway, from debris generated during a thermal event. Further, the present disclosure relates to a battery system employing one or more of the afore-mentioned battery modules. Also, the disclosure is related to a vehicle comprising at least one battery module according to the disclosure and/or at least one battery system according to the disclosure

## Description

### Field of the Disclosure

The present disclosure relates to a battery module having a protection mechanism for protecting a space at an end of the battery module during a thermal runaway event. Further, the present disclosure relates to a battery system employing one or more of the battery modules. Also, the disclosure is related to a vehicle including at least one battery module according to the disclosure and/or at least one battery system according to the disclosure.

### Technological Background

A battery pack is a set of any number of (for example identical) battery modules or single battery cells. The battery modules, respectively battery cells, may be configured in a series, parallel or a mixture of both to deliver the desired voltage, capacity, and/or power density. Components of a battery pack include the individual battery modules, and the interconnects, which provide electrical conductivity between the battery modules.

For meeting the dynamic power demands of various electrical consumers connected to a battery system, a static control of battery power output and charging is not sufficient. Thus, steady exchange of information between the battery system and the controllers of the electrical consumers is required. This information includes the battery system's actual state of charge, SoC, potential electrical performance, charging ability and internal resistance as well as actual or predicted power demands or surpluses of the consumers. Therefore, a battery system usually includes a battery management system, BMS, for obtaining and processing such information on system level and further a plurality of battery module managers, BMMs, which are part of the system's battery modules and obtain and process relevant information on module level. The BMS usually measures the system voltage, the system current, the local temperature at different places inside a system housing, and the insulation resistance between live components and the system housing. Additionally, the BMMs usually measure the individual cell voltages and temperatures of the battery cells in the battery module.

Thus, the BMS is provided for managing the battery pack, such as by protecting the battery from operating outside its safe operating area, monitoring its state, calculating secondary data, reporting that data, controlling its environment, authenticating it and/or balancing it.

In case of an abnormal operation state, a battery pack shall usually be disconnected from a load connected to a terminal of the battery pack. Therefore, battery systems further include a battery disconnect unit, BDU, that is electrically connected between the battery module and battery system terminals. Thus, the BDU is the primary interface between the battery pack and the electrical system of the vehicle. The BDU includes electromechanical switches that open or close high current paths between the battery pack and the electrical system. The BDU provides feedback to the battery control unit, BCU, accompanied to the battery modules such as voltage and current measurements. The BCU controls the switches in the BDU using low current paths based on the feedback received from the BDU. The main functions of the BDU may thus include controlling current flow between the battery pack and the electrical system and current sensing. The BDU may further manage additional functions like external charging and pre-charging.

Exothermic decomposition of cell components may lead to a so-called thermal runaway. Generally, thermal runaway describes a process that accelerates due to increased temperature, in turn releasing energy that further increases temperature. Thermal runaway occurs in situations when an increase in temperature changes the conditions in a way that causes a further increase in temperature, often leading to a destructive result. In rechargeable battery systems, thermal runaway is associated with strong exothermic reactions that are accelerated by temperature rise. In thermal runaway, the battery cell temperature rises incredibly fast and the energy stored is released very suddenly. In extreme cases, thermal runaway can cause battery cells to explode and start fire. In minor cases, it can cause battery cells to be damaged beyond repair.

When a battery cell is heated above a critical temperature (for example, above 150°C) the battery cell can transition into a thermal runaway. Generally, temperatures outside of the safe region on either the low or high side may lead to irreversible damage to the battery cell and therefore may possible trigger thermal runaway. Thermal runaway may also occur due to an internal or external short circuit of the battery cell or poor battery maintenance. For example, overcharging or rapid charging may lead to thermal runaway.

During thermal runaway, the failed battery cell may reach a temperature exceeding 700°C. Further, large quantities of hot gas are ejected from inside of the failed battery cell through a venting opening of a cell case into the battery pack. The main components of the vented gas are H₂, CO₂, CO, electrolyte vapor and other hydrocarbons. The vented gas is therefore flammable and potentially toxic. The vented gas also causes a gas-pressure to increase inside the battery pack. In the worst case, the high temperatures lead to the process spreading to neighboring cells and fire in the battery pack. At this stage, the fire is hardly to extinguish.

The BMS is critical to the safe operation and optimal performance of rechargeable battery cells and helps minimize the possibility of thermal runaway. For example, if the BMS detects that the temperature is too hot, it can regulate the temperature by controlling cooling fans. Alternatively, if the battery cell cannot be cooled and safe conditions restored, the BMS may shut down necessary battery cells to protect the entire battery system.

As described before, battery modules and battery systems include multiple battery cells, which may be arranged in serial connection, to achieve a sufficiently high voltage in order to provide a powerful source of energy for the propulsion of electric vehicles. These battery cells as well as electrical interconnections or voltage sources are usually insulated with plastic foils providing for the required electrical insulation within the normal operating temperatures up to 150°C.

However, in case of a malfunction of one or more battery cells or voltage sources, an overheating may happen, which causes the insulation barrier to melt, thereby causing a low electrical resistance between parts or components with high differential voltage (typically at least 20 V), which may cause, in turn, internal short circuits and arcing.

In case of thermal runaway of an individual battery cell, the environment is heated up by the exothermic reaction of the battery cell undergoing a thermal runaway. The amount of energy is determined by the size and chemistry of the battery cell. Therefore, a proper thermal insulation to the remaining battery cells of the battery module or battery system needs to be implemented to stop thermal propagation. The hot debris, which is typically expelled from a battery cell affected by a thermal runaway, becomes usually located at the edges inside the system housing of the battery system (such as spaces between ends of the battery module and the system housing, where typically high voltage interfaces are accommodated), which causes electrical short circuits followed by arcing.

Hence, there is a need for a battery module with a protection means that provides, when the battery module is implemented into the system housing, for shielding the spaces between the ends of the battery cell stacks and the system housing, where high voltage interfaces and further electric wiring is accommodated, from hot debris expelled from one or more battery cells affected by a thermal runaway. Further, there is a need for a battery system being equipped with such protection mechanism that allows for shielding the spaces between the ends of the battery module and the system housing.

The present disclosure provides a battery module that is capable of shielding the space between an end of a battery cell stack and a housing of a battery system, when there is a thermal runaway. Further, the present disclosure also provides a battery system with the battery module.

### Summary of Invention

The invention is defined by the appended claims. The description that follows is subjected to this limitation. Any disclosure lying outside the scope of the claims is only intended for illustrative as well as comparative purposes.

According to a first aspect of the present disclosure, a battery module includes: a battery cell stack with a plurality of battery cells stacked along a first direction; and a first battery module management unit including a first battery module management housing. Each of the battery cells includes a case with a terminal side including a first terminal, a second terminal, and a venting outlet arranged between the first terminal and the second terminal. The first battery module management housing includes a base portion, a first leg portion, and a second leg portion. The base portion is arranged in front of the first battery cell of the battery cell stack, when viewing into the first direction. The first leg portion protrudes from the base portion into the first direction and covers one or more of the first terminals. The second leg portion protrudes from the base portion into the first direction and covers one or more of the second terminals. A gap is formed between the first leg portion and the second leg portion. Further, each of the venting outlets being positioned, along the first direction, in the area of the first leg portion and the second leg portion are positioned in the gap.

According to a second aspect, a battery system includes one or more battery modules according to the first aspect.

According to a third aspect, a vehicle includes at least one battery module according to the first aspect and/or at least one battery system according to the second aspect

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
- FIG. 1: illustrates a perspective view of a conventional battery cell.
- FIG. 2: illustrates a top view on a battery module according to the state-of-the-art.
- FIG. 3: illustrates a top view of an embodiment of a battery module according to the present disclosure.
- FIG. 4: illustrates a top view of an end-portion of the embodiment of FIG. 3.
- FIG. 5: illustrates a cross-sectional cut through the embodiment of FIG. 3.
- FIG. 6: illustrates a top view of another embodiment of a battery module according to the present disclosure.
- FIG. 7: illustrates a top view of an embodiment of a battery system according to the present disclosure.
- FIG. 8A: illustrates a lateral view of an end-portion of an embodiment of a battery module according to the present disclosure.
- FIG. 8B: illustrates a front view of the end-portion of the embodiment of FIG. 8A.
- FIG. 9: illustrates a lateral view of an end-portion of another embodiment of a battery module according to the present disclosure.
- FIG. 10: illustrates a lateral view of an end-portion of yet another embodiment of a battery module according to the present disclosure.

### Detailed Description of the Invention

Reference will now be made in detail to embodiments, examples of which are illustrated in the accompanying drawings. Effects and features of the exemplary embodiments, and implementation methods thereof, will be described with reference to the accompanying drawings. In the drawings, like reference numerals denote like elements, and redundant descriptions are omitted. The present disclosure, however, may be embodied in various different forms, and should not be construed as being limited only to the illustrated embodiments herein. Rather, these embodiments are provided as examples so that this disclosure will be thorough and complete, and will fully convey the aspects and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present disclosure refers to "one or more embodiments of the present disclosure." In the following description of embodiments of the present disclosure, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure. As used herein, the term "and/or" includes any and all combinations of one or more of the associated listed items. Expressions such as "at least one of," when preceding a list of elements, modify the entire list of elements and do not modify the individual elements of the list.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

It will also be understood that when a film, a region, or an element is referred to as being "above" or "on" another film, region, or element, it can be directly on the other film, region, or element, or intervening films, regions, or elements may also be present.

Herein, the terms "upper" and "lower" are defined according to the z-axis. For example, the upper cover is positioned at the upper part of the z-axis, whereas the lower cover is positioned at the lower part thereof. In the drawings, the sizes of elements may be exaggerated for clarity. For example, in the drawings, the size or thickness of each element may be arbitrarily shown for illustrative purposes, and thus, the embodiments of the present disclosure should not be construed as being limited thereto.

The electronic or electric devices and/or any other relevant devices or components according to embodiments of the present disclosure described herein may be implemented utilizing any suitable hardware, firmware (e.g., an application-specific integrated circuit), software, or a combination of software, firmware, and hardware. Further, the various components of these devices may be implemented on a flexible printed circuit film, a tape carrier package (TCP), a printed circuit board (PCB), or formed on one substrate. The electrical connections or interconnections described herein may be realized by wires or conducting elements, e.g., on a PCB or another kind of circuit carrier. The conducting elements may include metallization, e.g., surface metallizations and/or pins, and/or may include conductive polymers or ceramics. Further electrical energy might be transmitted via wireless connections, e.g., using electromagnetic radiation and/or light.

Further, the various components of these devices may be processes or threads, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

### General Concept

According to a first aspect of the present disclosure, a battery module includes: a battery cell stack with a plurality of battery cells stacked along a first direction; and a first battery module management unit including a first battery module management housing. Each of the battery cells includes a case with a terminal side including a first terminal, a second terminal, and a venting outlet arranged between the first terminal and the second terminal. The first battery module management housing includes a base portion, a first leg portion, and a second leg portion. The base portion is arranged in front of the first battery cell of the battery cell stack, when viewing into the first direction. The first leg portion protrudes from the base portion into the first direction and covers one or more of the first terminals. The second leg portion protrudes from the base portion into the first direction and covers one or more of the second terminals. A gap is formed between the first leg portion and the second leg portion. Further, each of the venting outlets being positioned, along the first direction, in the area of the first leg portion and the second leg portion are positioned in the gap.

As can be learned from above, the first battery module management housing has a U-formed shape arranged above the battery cell stack, the legs of the U covering at least some of the terminals, and the gap formed between the legs of the U being arranged in the area of the venting valves. Hence, the shape and the placing of the first battery module management housing ensures that each of the venting valve is not covered by the first battery module management housing.

The improvement of the proposed battery module in comparison with conventional battery modules is to provide a protection means at the regions at an end of the battery cell stack so as to protect the electrical wiring (such as high voltage interfaces) located there in case of a thermal runaway of one or more battery cells, when the battery module is implemented into the housing of a battery system (the housing of the battery system not being part of the battery module according to the first aspect). In other words, the proposed solution is based on a housing of the battery measurement or cell monitoring system (battery module management housing) being designed so as to form a barrier for the debris created by a thermal runaway, which otherwise would be deposited, at least to a major part, on the edge between the battery cell stack and the housing of the battery system with the electrical wiring in between. Thus, in a battery system equipped with one or more battery modules according to the first aspect of the disclosure, the debris becomes distributed on sections of the battery system with much less severity to cause arcing or overheating other battery cells.

The first terminal, the venting outlet, and the second terminal may be aligned parallel to a second direction perpendicular to the first direction. Each of the terminal sides may be arranged perpendicular to a third direction and may face into the third direction, the third direction being perpendicular to the first direction and the second direction.

The first terminals may be arranged along a straight line extending parallel to the first direction. The second terminals may be arranged along a straight line extending parallel to the first direction. The venting outlets may be arranged along a straight line extending parallel to the first direction.

The gap being formed between the first leg portion and the second leg portion may be due to a distance between the first leg portion and the second leg portion, when viewing along the second direction.

The first battery module management unit may further include a first battery module management electronics accommodated in the first battery module management housing.

The battery cell stack may include at least two battery cells, at least three battery cells, at least four cells, or at least five battery cells. For example, the battery cell stack may include 10 battery cells, 15 battery cells, 20 battery cells, 25 battery cells, or 30 battery cells.

The first battery module management electronics may be electrically connected to one or more of the battery cells. The first battery module management electronics may be configured to monitor the current and/or the voltage generated by the battery cell stack. The first battery module management electronics may be configured to monitor the current and/or the voltage generated by one or more of the individual battery cells. The first battery module management electronics may be configured to monitor the current and/or the voltage generated by each of the individual battery cells.

One or more of the battery cells may be equipped with a temperature sensor configured for measuring the temperature of the respective battery cell. In embodiments, all battery cells may be equipped with a temperature sensor.

One or more of the battery cells may be equipped with a pressure sensor configured for measuring the pressure inside the respective battery cell. In embodiments, all battery cells may be equipped with a pressure sensor.

The first battery module management electronics may be configured to receive signals from the one or more pressure sensors and/or the one or more temperature sensors. The first battery module management electronics may be configured to evaluate the signals received from the one or more pressure sensors and/or the one or more temperature sensors. The first battery module management electronics may be configured to evaluate, based on the signals received from the one or more pressure sensors and/or the one or more temperature sensors, whether one or more of the battery cells are in a state of a thermal event such as a thermal runaway.

The base portion may have a hollow cuboid shape. The hollow cuboid shape of the base portion may have a first opening in a region, where the first leg portion is connected to the base portion. The hollow cuboid shape of the base portion may have a second opening in a region, where the second leg portion is connected to the base portion. The base portion may extend, with respect to the second direction, over the length of the first battery cell. The first leg portion may have a hollow cuboid shape. The hollow cuboid shape of the first leg portion may be open in an area, where the first leg portion is connected to the base portion. The second leg portion may have a hollow cuboid shape. The hollow cuboid shape of the second leg portion may be open in an area, where the second leg portion is connected to the base portion.

Each of the base portion, the first leg portion, and the second leg portion may include a cavity suitable for accommodating at least a part of the first battery module management electronics. The cavities enclosed by the base portion, the first leg portion, and the second leg portion may be connected such that one continuous cavity is formed in the first battery module management housing.

In one embodiment of the battery module according to the first aspect, the first leg portion and the second leg portion have the same extension with regard to the first direction.

With regard to the first direction, the first leg portion may cover only the first terminal of the first battery cell, or may cover the first terminals of only the first and the second battery cell, or may cover the first terminals of the group of battery cells including only the first, third, and second battery cell, or may cover the first terminals of the group of battery cells including only the first to the forth battery cell. Alternatively, the first leg portion may cover the first terminals of at least the first to the fifth battery cell.

With regard to the first direction, the second leg portion may cover only the second terminal of the first battery cell, or may cover the second terminals of only the first and the second battery cell, or may cover the second terminals of the group of battery cells including only the first, third, and second battery cell, or may cover the second terminals of the group of battery cells including only the first to the forth battery cell. Alternatively, the second leg portion may cover the second terminals of at least the first to the fifth battery cell.

In one embodiment, the battery module includes a first end-plate, the first end-plate being arranged, when viewing into the first direction, in front of the first battery cell and being configured to support the first battery cell with respect to the first direction.

In one embodiment, the battery module includes a second end-plate, the second end-plate being arranged, when viewing into the first direction, behind the last battery cell and being configured to support the last battery cell against the first direction.

In one embodiment of the battery module, the first end-plate has a prismatic shape. The base portion of the first battery module management housing is arranged on a top face of the first end-plate, the top face facing into a direction perpendicular to the terminal sides of the battery cells.

In one embodiment of the battery module, a first cavity (or interstice) is formed, with regard to a direction perpendicular to the terminal sides of the battery cells, between the first leg portion and the battery cell stack. The first terminals covered by the first leg portion are arranged in the first cavity.

In one embodiment of the battery module, a second cavity (or interstice) is formed, with regard to a direction perpendicular to the terminal sides of the battery cells, between the second leg portion and the battery cell stack, and the second terminals covered by the second leg portion are arranged in the second cavity.

In one embodiment of the battery module, the first leg portion has a wedge-shaped form tapering in the first direction such that a distance between the battery cell stack and a top face of the first leg portion becomes smaller, when viewing into the first direction.

In one embodiment of the battery module, the second leg portion has a wedge-shaped form tapering in the first direction such that a distance between the battery cell stack and a top face of the second leg portion becomes smaller, when viewing into the first direction.

The tapering of the first leg portion in the x-direction may be stepless (continuous) or stepped. Also, the tapering of the second leg portion in the x-direction may be stepless (continuous) or stepped.

In one embodiment, the battery module further includes a first busbar electrically connected to each of the first terminals, the first busbar being covered, at least in the area of the first leg portion, by a first bus bar protection.

As can be concluded from the description above, the first busbar may be arranged, in the area of the first leg portion, in the first cavity formed between the first leg portion and the battery cell stack.

In one embodiment of the battery module, the first protection cover includes: a first pedestal part mounted on the terminal sides of at least the battery cells covered by the first leg portion and extending, along the first direction, in a region between the first terminals and the venting outlets of at least the battery cells covered by the first leg portion; and a first flat part arranged on the first pedestal part and extending between the first leg portion and at least the battery cells covered by the first leg portion.

In one embodiment, the battery module further includes a second busbar electrically connected to each of the second terminals, the second busbar being covered, at least in the area of the second leg portion, by a second bus bar protection.

The second busbar may be arranged, in the area of the second leg portion, in the second cavity formed between the second leg portion and the battery cell stack.

In one embodiment of the battery module, the second protection cover includes: a second pedestal part mounted on the terminal sides of at least the battery cells covered by the second leg portion and extending, along the first direction, in a region between the second terminals and the venting outlets of at least the battery cells covered by the second leg portion; and a second flat part arranged on the second pedestal part and extending between the second leg portion and at least the battery cells covered by the second leg portion.

In one embodiment, the battery module further includes a second battery module management unit. The second battery module management unit includes a second battery module management housing. The second battery module management housing includes a further base portion, a further first leg portion, and a further second leg portion. The further base portion is arranged behind the last battery cell of the battery cell stack, when viewing into the first direction. The further first leg portion protrudes from the further base portion against the first direction and covers one or more of the first terminals. The further second leg portion protrudes from the further base portion against the first direction and covers one or more of the second terminals. A further gap is formed between the further first leg portion and the further second leg portion. Each of the venting outlets being positioned, along the first direction, in the area of the further first leg portion and the further second leg portion are positioned in the further gap.

The second battery module management unit may further include a second battery module management electronics accommodated in the second battery module management housing.

The second battery module management housing may be shaped identically to the first battery module management housing. The second battery module management housing may have a shape obtained by mirroring the shape of the first battery module management housing, for example by mirroring the shape of the first battery module management housing on a plane perpendicular to the first direction.

The material of the first battery module management housing may be heat resistant up to the temperature range of hot debris generated during a thermal runaway. For example, material of the first battery module management housing may be heat resistant up to a temperature of 800° C, or for example up to a temperature of 1000° C, or up to a temperature of 1200° C, or up to a temperature of at least 1500° C. Correspondingly, the material of the second battery module management housing may be heat resistant up to the temperature range of hot debris generated during a thermal runaway. For example, material of the second battery module management housing may be heat resistant up to a temperature of 800° C, or for example up to a temperature of 1000° C, or up to a temperature of 1200° C, or up to a temperature of at least 1500° C.

The material of the first battery module management housing and/or the material of the second battery module management housing may a thermally insulating material. The first battery module management housing and/or the second battery module management housing may be covered, on its outside surface and/or its inside surface, with a thermally insulating material.

The first battery module management housing and/or the second battery module management housing may be made of an electrically insulating material such as plastics, for example a heat resistant plastics material.

According to a second aspect, a battery system includes one or more battery modules according to the first aspect.

A battery system according to the second aspect has the ability to particular protect the area between the battery cell stack and sidewalls of the battery system housing against hot particle deposition during a thermal runaway event and further against arcing, by means of a specially formed housing of the BMM or cell monitoring system (BMM housing) placed on top of the cell stack.

In one embodiment, the battery system according to the second aspect further includes a battery system housing, the battery system housing accommodating each of the battery modules. The stack directions of the battery cell stacks of the battery modules are oriented parallel to each other, each of the battery cell stacks having a first end pointing against the stack direction and a second end pointing into the stack direction. The battery system housing includes a front wall extending perpendicular to the stack direction, and a rear wall extending perpendicular to the stack direction. For each of the battery cell stacks, a first space is formed between the first end of the battery cell stack and the front wall, and a second space is formed between the second end of the battery cell stack and the rear wall. Each of the battery module management housings arranged at the first ends of the battery modules abuts against the front wall so as to cover the respective first space.

Also, each of the second battery module management housings arranged at the second ends of the battery modules may abut against the rear wall so as to cover the respective second space.

In the first space and/or the second space, high voltage interfaces may be accommodated.

In one embodiment of the battery system, any two battery module management housings being arranged adjacent to each other with respect to a direction perpendicular to the stack direction of the battery cell stacks are connected to each other with a connection plate.

The battery system housing may further include a bottom wall. For each of the connection plates, a space between the connection plate and the bottom wall may be formed. In some or each of the spaces formed between the connection plates and the bottom wall, module connectors or battery cell stack connectors may be positioned. Then, these module connectors or battery cell stack connectors are protected, connection plates, from hot debris generated in case of a thermal runaway.

According to a third aspect, a vehicle includes at least one battery module according to the first aspect and/or at least one battery system according to the second aspect

For example, the vehicle is a hybrid vehicle or a fully electric vehicle.

### Specific Embodiments

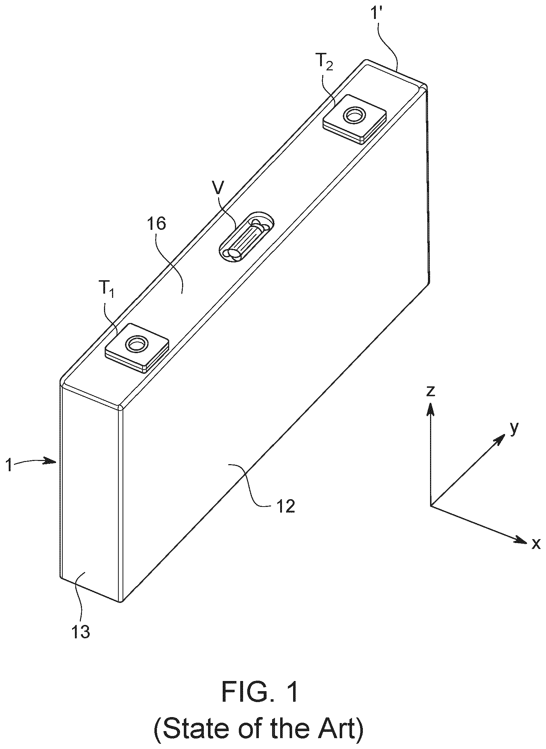

Figure 1 provides a perspective view illustrating a typical design of a state-of-the-art battery cell 1 used, e. g., in a battery module for an electric or hybrid vehicle. To facilitate the following description, a Cartesian coordinate system with axes x, y, and z is also depicted in FIG. 1. The illustrated battery cell 1 has a parallelepiped (prismatic) shape essentially defined by a case 1'. The case 1' is for example a hardcase, which may be made, e. g., of a metal material such as aluminum. The case 1' may be built by a can or barrel including six essentially planar outer side faces. The case 1' includes a pair of congruent main sides (of that pair, only the side 12 facing into the x-direction is shown in FIG. 1) arranged opposite to each other, each of the main sides being perpendicular to the x-axis. Also, the case 1' includes a pair of congruent lateral sides (of this pair, only the side 13 facing against the y-direction is shown) arranged opposite to each other, each of the lateral sides being perpendicular to the y-axis. Finally, the case 1' includes a lower side (not visible in FIG. 1) and an upper side 16, the lower side and the upper side 16 being congruent and arranged opposite to each other, each of the lower side and the upper side 16 being perpendicular to the z-axis. As can be seen in FIG. 1, the main sides of the battery cell 1 form the battery cell's sides having the largest (maximal) surface.

As the case 1' may be made of metal such as aluminum, it may be electrically conductive. Thus, the case 1' may be coated by an isolation foil (not shown in FIG. 1) that ensures for electrical insulation. However, the isolation foil is thermally not robust enough to maintain electric insulation at temperatures of up to 1000° C and more, which may be generated in case of a venting event. As will be described later in more detail, a battery module according to the first aspect of the disclosure or a battery system according to the second aspect of the disclosure is equipped with a special formed housing of the BMM or cell monitoring electronics, which is placed at the end of battery cell stacks to protect that areas (where electrical connection is done in a module-wise manner) against particle deposition and the root cause for arcing.

On the upper side 16 of the battery cell 1, a first terminal T₁ and a second terminal T₂ are arranged. Accordingly, the upper side 16 will be referred to in the following as the "terminal side" of battery cell 1. The terminals T₁ and T₂ allow for an electrical connection of the battery cell 1. The first terminal T₁ may be the negative terminal of the battery cell 1, and the second terminal T₂ may be the positive terminal of the battery cell 1. Furthermore, between the first terminal T₁ and the second terminal T₂, a venting outlet V is arranged on the upper side 16. As visible in FIG. 1, the first terminal T₁, the venting outlet V, and the second terminal T₂ are aligned, in this order, along the y-direction of the coordinate system.

Through the venting outlet V, vent gas can be ejected from the battery cell 1 in case of a thermal event such as a thermal runaway occurring in the battery cell 1. Inside the battery cell 1, a valve (not shown) is usually installed upstream of the venting outlet V, the valve being configured to open, if the gas pressure inside the battery cell exceeds a predefined value, and to remain in a closed stated otherwise, i. e., when the gas pressure inside the battery cell is below the predefined value. Thus, before being output via the venting outlet V, the vent gas may pass the venting valve arranged inside the battery cell 1.

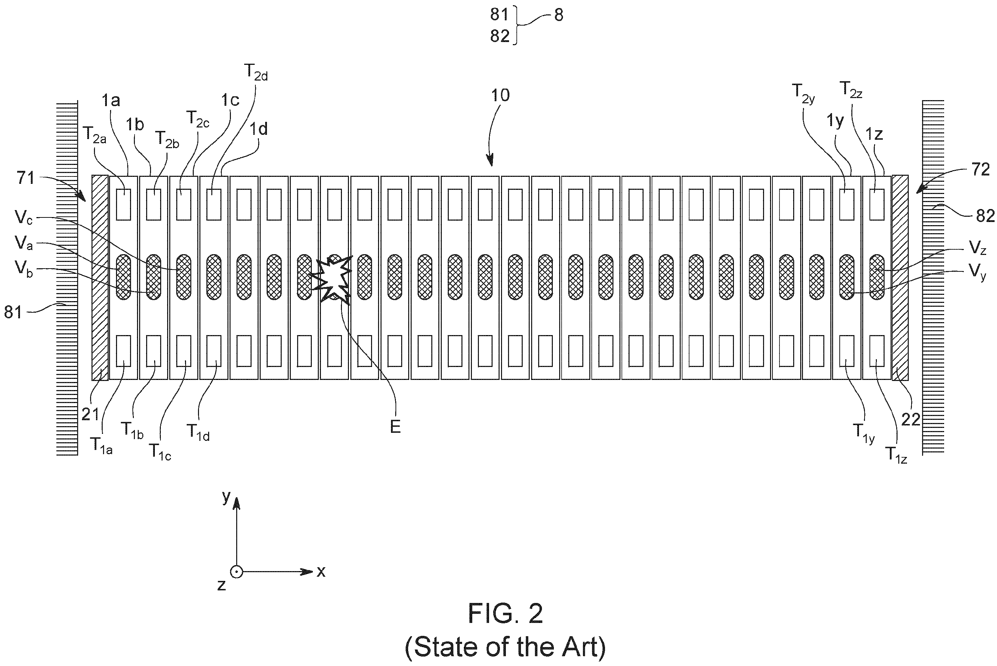

By stacking a plurality of battery cells 1a, 1b, ..., 1z being designed like the battery cell 1 shown in FIG. 1 along a first direction, a stack of battery cells 10 (in the following also referred to as "battery cell stack" or simply as "stack") is created, as exemplarily shown illustrated in Figure 2. For example, the first direction (in the following also be referred to as the "stack direction") may correspond to a direction parallel to the x-axis of the coordinate system in FIG. 1. Then, any one of the individual battery cells 1a, 1b, ..., 1z may be oriented such in the stack 10 that its main sides each extend perpendicular to the axis x of the coordinate system. Typically, a plurality of battery cell stacks is used in a battery system.

In a battery cell stack, neighbored battery cells may either directly abut against each other or be spaced apart by cell spacers. Cell spacers can be used to adjust the correct length of a stack. Furthermore, cell spacers (also referred to as "gap fillers") can be configured to inhibit or at least reduce thermal propagation along the stack, for example in view of the heat generated during a thermal runaway. One or more battery cell spacers may be combined in a battery cell stack.

Also, a battery cell stack may be stabilized by end-plates. For example, with reference to FIG. 2, a first end-plate 21 may be arranged at the front of the first battery cell 1a in the stack 10, as viewed in the stack direction (x-direction), thereby providing mechanical support for the first battery cell 1a along the stack direction. Correspondingly, a second end-plate 22 may be positioned at the back of the last battery cell 1z in the stack 10, as viewed in the stack direction, thereby providing mechanical support for the last battery cell 1z against the stack direction. The end-plates 21, 22 help maintain the alignment of the battery cells 1a, 1b, ..., 1z, prevent movement, and counteract forces that might cause deformation or dislocation within the battery cell stack 10. For example, the end-plates 21, 22 counteract swelling forces generated by the expansion of the battery cells 1a, 1b, ..., 1z during use, thus preventing deformation and maintaining the alignment of the individual battery cells 1a, 1b, ..., 1z. This ensures the integrity of the battery cell stack 10, particularly during handling and operation.

The battery cell stack 10 (together with the end-plates 21, 22) may be accommodated in a housing 8, the housing 8 being part of the battery module or the battery system that includes the battery cell stack 10. In FIG. 2, a part of a front wall 81 and a part of a rear wall 82 of the housing 8 are sketched, the front wall 81 and the rear wall 82 each extending parallel to the y-z-plane of the coordinate system, i. e., perpendicular to the drawing plate of FIG. 2. A bottom wall is omitted in FIG. 2 for the sake of simplicity. Between the first end-plate 21 and the front wall 81, a first space 71 is formed. Similarly, between the second end-plate 22 and the rear wall 82, a second space 72 is formed.

Due to the identical design of the individual battery cells 1a, 1b, ..., 1z within the stack 10 of FIG. 2, the first terminals T₁ₐ, T_{1b}, ..., T_{1z} of the battery cells 1a, 1b, ..., 1z are aligned one behind the other in a straight line parallel to the stack direction (x-direction). Likewise, the second terminals T₂ₐ, T_{2b}, ..., T_{2z} of the battery cells 1a, 1b, ..., 1z are aligned one behind the other in a straight line parallel to the stack direction. Also, the venting outlets V of the battery cells 1a, 1b, ..., 1z are aligned one behind the other in a straight line parallel to the stack direction.

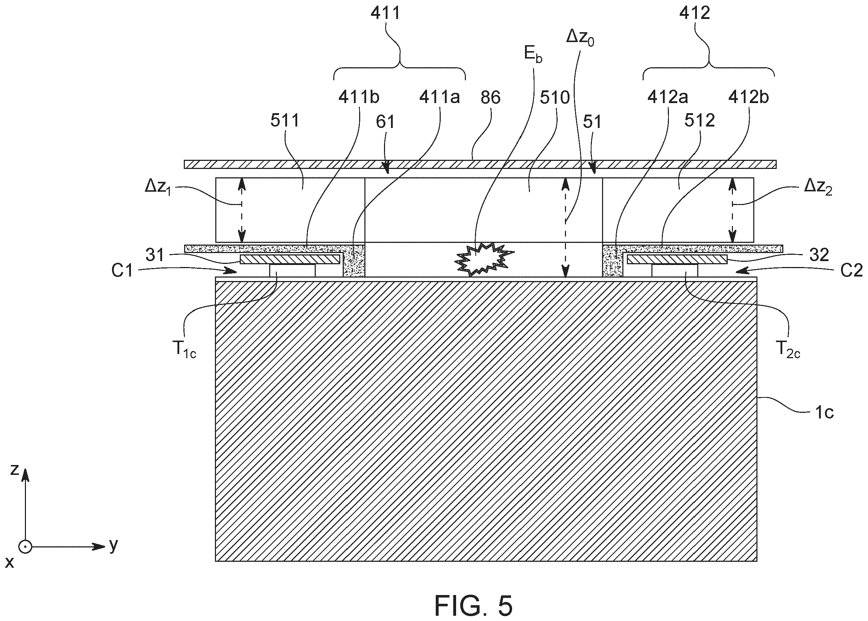

The battery cells 1a, 1b, ..., 1z may be electrically connected either in series or in parallel. If they are connected in parallel, the first terminals T₁ₐ, T_{1b}, ..., T_{1z} of the battery cells 1a, 1b, ..., 1z have the same electrical polarity (e. g., form the negative poles of the battery cells), and each of the second terminals T₂ₐ, T_{2b}, ..., T_{2z} has the electrical polarity opposite to the polarity of the first terminals T₁ₐ, T_{1b}, ..., T_{1z} (e. g., the second terminals T₂ are the positive poles of the battery cells). Then, the first terminals T₁ₐ, T_{1b}, ..., T_{1z} of the battery cells 1a, 1b, ..., 1z may each be connected to a common first busbar 32 (not shown in FIG. 2; see FIG. 5), while the second terminals T₂ₐ, T_{2b}, ..., T_{2z} of the battery cells 1a, 1b, ..., 1z may each be connected to a common second busbar 32 (not shown in FIG. 2; see FIG. 5). The first busbar 31 and the second busbar 32 may then serve as the terminals of the entire battery cell stack 10.

If, in the alternative, the battery cells 1a, 1b, ..., 1z of the stack 10 are electrically connected in series, the polarity of the first terminals T₁ₐ, T_{1b}, ..., T_{1z} alternates along the stack 10, and, correspondingly, the polarity of the second terminals T₂ₐ, T_{2b}, ..., T_{2z} also alternates along the stack 10. For example, when viewing into the stack direction (x-direction), the first terminals T₁ₐ, T_{1c}, ..., T_{1y} of the battery cells 1a, 1c, ..., 1y arranged at an odd position in the stack 10 form each a negative pole of the respective battery cell, while the first terminals T_{1b}, T_{1d}, ..., T_{1z} of the battery cells 1b, 1d, ..., 1z arranged at an even position in the stack 10 form each a positive pole of the respective battery cell, and, correspondingly, the second terminals T₂ₐ, T_{2c}, ..., T_{2y} of the battery cells 1a, 1c, ..., 1y arranged at an odd position in the stack 10 form each a positive pole of the respective battery cell, while the second terminals T_{2b}, T_{2d}, ..., T_{2z} of the battery cells 1b, 1d, ..., 1z arranged at an even position in the stack 10 form each a negative pole of the respective battery cell. Then, the battery cells 1a, 1b, ..., 1z may be electrically linked in a chain-like sequence, where the positive terminal of each battery cell (except for the last battery cell 1z) is connected to the negative terminal of the respective subsequent battery cell. Specifically, the positive terminal T₂ₐ of cell 1a is connected to the negative terminal T_{2b} of cell 1b. This pattern continues until the positive terminal T_{2y} of the penultimate battery cell 1y in the stack 10 is connected to the negative terminal T_{2z} of the final battery cell 1z. The remaining terminals, viz. the negative terminal T₁ₐ of the first battery cell 1a and the positive terminal T_{1z} of the last battery cell 1z, serve as the negative and positive terminals of the entire battery cell stack 10, respectively.

Typically, high voltage interfaces are placed in the spaces left between the ends of a battery stack (the ends, depending on the embodiment, being formed by a battery cell or an end-plate) and the respective adjacent walls of the housing accommodating the battery cell stack. Accordingly, in the example shown in FIG. 2, high voltage interfaces (not shown) may be located in the first space 71 and/or the second space 72. The high voltage interfaces may, e. g., include module connectors or stack connectors, which connect two adjacent battery modules or battery cell stacks.

In case of a thermal runaway occurring in one or more of the battery cells included in the stack, the generated hot debris expelled from the affected battery cells is usually located at the edges inside a battery system. Hence, most of the debris will collect in these edge areas of the battery system such as the above-described spaces between the ends of a battery stack and the respective adjacent walls of the housing. Accordingly, in the example of FIG. 2, most of the debris generated by a thermal runaway E (schematically indicated by a flame symbol) occurring in one or more of the battery cells 1a, 1b, ..., 1z would collect in the first space 71 and/or the second space 72. Hence, if high voltage interfaces are placed in the first space 71 and/or the second space 72, this causes a high risk of electrical short circuits followed by arcing.

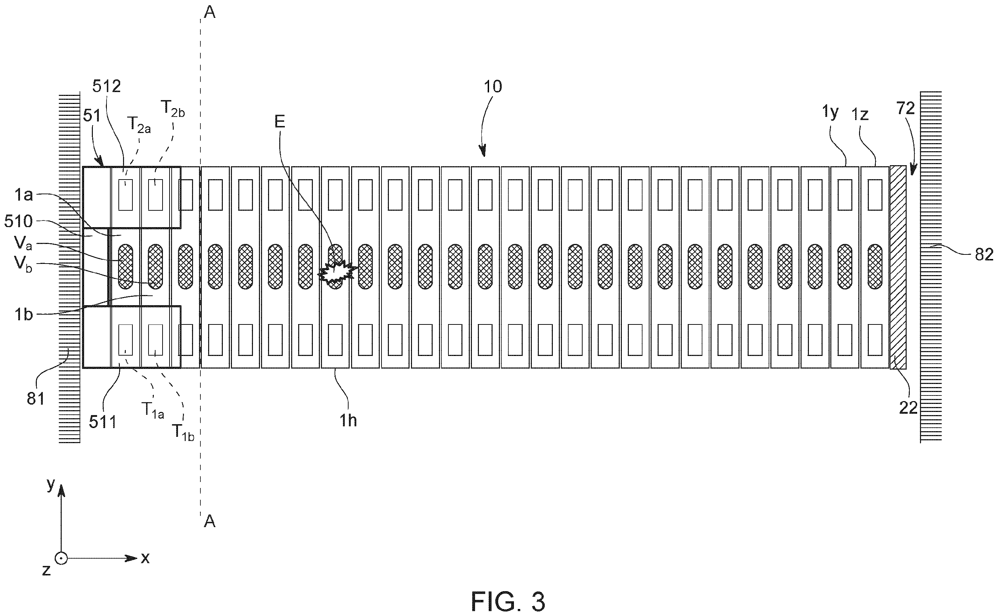

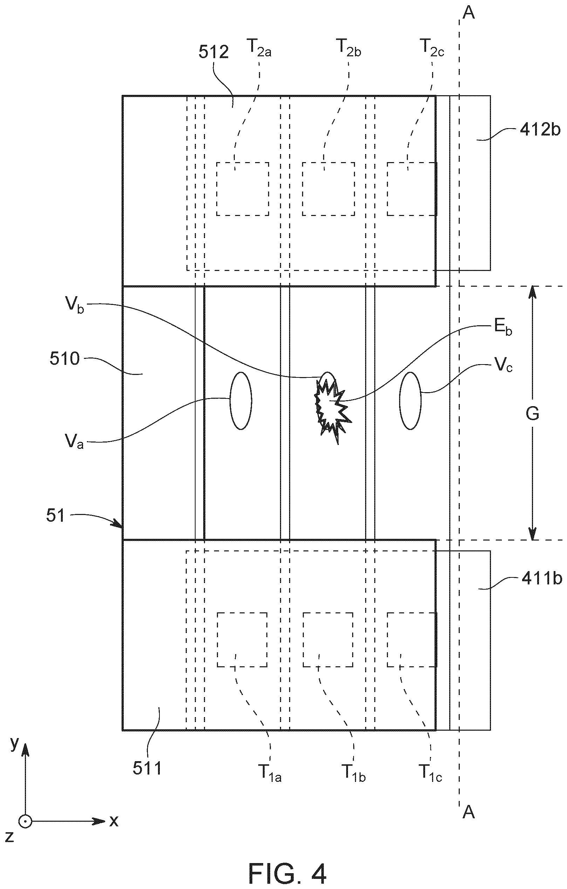

Figure 3 illustrates the protection concept of a battery module with thermal propagation measures against particle deposition between a battery cell stack and housing, where the high voltage interfaces are located. Debris generated by a thermal runaway is usually deposited most likely at the outer edges of the inside of the housing of a battery system. FIG. 3 schematically illustrates a top view of an embodiment of a battery module according to the present disclosure. The battery module of FIG. 3 includes a battery cell stack designed similar to the battery cell stack 10 described with reference to FIG. 2. Additionally, a battery module management (BMM) unit is installed at a first end of the battery module 10, i. e., at the battery module's end pointing against the stack direction (x-direction). The BMM unit includes a battery module management housing 51 and a battery module management electronics (not shown) accommodated in the BMM housing 51. More detailed views of the BMM housing 51 from different directions are provided in Figs. 4 and 5.

Figure 4 provides a schematic top view on an end portion of the battery module as shown in FIG. 3, the end portion including the BMM housing 51 and, as viewed along the x-direction, the first three battery cells 1a, 1b, 1c of the battery cell stack 10, in other words, Fig, 4 is an enlarged top view on the portion of the battery module depicted in FIG. 3 between the front wall 81 and the virtual dashed line A-A depicted in FIG. 3. FIG. 4 shows a top view of a specially formed housing of the BMM, which, as will be described later, is suitable as a measure against particle deposition during a thermal runaway in the region of high voltage interfaces between cell stack and housing.

Further, Figure 5 is view on the portion of the battery module as shown in FIG. 4 against the x-direction. To illustrate arrangements of members such as terminals being covered by the BMM housing 51, the BMM housing 51 is illustrated transparent in figures providing a top view on the battery module. By Figs. 3 to 5, the basic concept of thermal propagation measures is described, which allows for protecting the high voltage interfaces at the end of the cell stacks against hot particle deposition during a thermal runaway event.

With respect to the z-direction, the BMM housing 51 is positioned above the battery cell stack 10, as illustrated in FIG. 5. As viewed against the z-direction (see Figs. 3 and 4), the BMM housing 51 exhibits an approximately U-shaped outer appearance including a base portion 510 as well as a first leg portion 511 and a second leg portion 512. Along the x-direction, the base portion 510 is arranged at the front of the first battery cell 1a in the stack 10. Each of the first leg portion 511 and the second leg portion 512 are connected to the base portion 510 and point, from the area of the base portion 510, into the x-direction. With respect to the y-direction, the first leg portion 511 and the second select portion 512 are spaced apart from each other such that a gap G is formed between the first leg portion 511 and the second select portion 512 (see FIG. 4).

The gap G between the first leg portion 511 and the second select portion 512 is dimensioned such that each of the battery cells 1a, 1b, 1c being partly covered by the leg portions 511, 512, the respective venting outlets Vₐ, V_{b}, V_{c} are located in the area of the gap G. Hence, in case of a venting event occurring in one of these battery cells 1a, 1b, 1c (e. g., in the second battery cell 1b as indicated by the flame symbol Eₕ in FIG. 4), the created vent gas can escape freely upwards (i. e., in z-direction) through the gap G.

At least in the region of the BMM housing 51, a pair of heat resistant protection covers 411, 412 is mounted on top of the battery cell stack 40 to protect the first terminals T₁ₐ, T_{1b}, T_{1c} and the second terminals T₂ₐ, T_{2b}, T_{2c} located in the region of the BMM housing 51, as well as possibly other electrical installations in this region such as busbars 31, 32 or battery cell control units (CCUs; not shown) for monitoring and controlling the status of the respective battery cells such as the cell voltage or the cell temperature. As can be seen in Figs. 4 and 5, a first protection cover 411 is mounted in the area of the first terminals T₁ₐ, T_{1b}, T_{1c}, and a second protection cover 412 is mounted in the area of the second terminals T₂ₐ, T_{2b}, T_{2c}.

The first protection cover 411 includes a first pedestal part 411a and a first flat part 411b mounted on top of the first pedestal part 411a. To illustrate the arrangements of the first terminals T₁ₐ, T_{1b}, T_{1c} being covered by the first flat part 411b, the first flat part 411b (and first leg 511 of the BMM housing 51) is illustrated transparent in FIG. 4. The first pedestal part 411a is installed on the terminal sides of the battery cells 1a, 1b, 1c and extends, along the x-direction, between the first terminals T₁ₐ, T_{1b}, T_{1c} and the venting outlets Vₐ, V_{b}, V_{c} of these battery cells 1a, 1b, 1c. With respect to the z-direction, the first pedestal part 411a extends between the terminal sides of the battery cells 1a, 1b, 1c and the first flat part 411b. The first flat part 411b extends parallel to the x-y-plane of the coordinate system over the region of the first terminals T₁ₐ, T_{1b}, T_{1c} and is spaced apart from the terminal sides of the battery cells 1a, 1b, 1c so as to provide a first cavity C11 for the first terminals T₁ₐ, T_{1b}, T_{1c} (and possibly other electrical installations in this region; see above) between the terminal sides of the first three battery cells 1a, 1b, 1c and the first flat part 411b. This way, the first terminals T₁ₐ, T_{1b}, T_{1c} and the other electrical installations in this region are protected from being polluted by debris expelled from battery cells in case of a thermal runaway.

The second protection cover 412 is formed and installed in a symmetrical manner with respect to a virtual mirror plane parallel to the x-z-plane and intersecting the venting outlets Vₐ, V_{b}, V_{c} of these battery cells 1a, 1b, 1c. Specifically, the second protection cover 412 includes the second pedestal part 412a and a second flat part 412b mounted on top of the second pedestal part 412a. To illustrate the arrangements of the second terminals T₂ₐ, T_{2b}, T_{2c} being covered by the second flat part 412b, the second flat part 412b (and the second leg 512 of the BMM housing 51) is illustrated transparent in FIG. 4. The second pedestal part 412a is installed on the terminal sides of the battery cells 1a, 1b, 1c and extends, along the x-direction, between the second terminals T₂ₐ, T_{2b}, T_{2c} and the venting outlets Vₐ, V_{b}, V_{c} of these battery cells 1a, 1b, 1c. With respect to the z-direction, the second pedestal part 412a extends between the terminal sides of the battery cells 1a, 1b, 1c and the second flat part 412b. The second flat part 412b extends parallel to the x-y-plane of the coordinate system over the region of the second terminals T₂ₐ, T_{2b}, T_{2c} and is spaced apart from the terminal sides of the battery cells 1a, 1b, 1c so as to provide a second cavity C12 for the second terminals T₂ₐ, T_{2b}, T_{2c} (and possibly other electrical installations in this region; see above) between the terminal sides of the first three battery cells 1a, 1b, 1c and the second flat part 412b. This way, the second terminals T₂ₐ, T_{2b}, T_{2c} and the other electrical installations in this region are protected from being polluted by debris expelled from battery cells in case of a thermal runaway.

While in the embodiment of FIG. 4, the first protection cover 411 is mounted only in the area of the first terminals T₁ₐ, T_{1b}, T_{1c} of the first three battery cells 1a, 1b, 1c, the first protection cover 411 may, in alternative embodiments, extend, with respect to the x-direction, along the complete battery cell stack 10. Then, the first protection cover 411 allows for a protection of each of the first terminals T₁ₐ, T_{1b}, ..., T_{1z} of the battery cell stack 10. Also, in the embodiment of FIG. 4, the second protection cover 412 is mounted only in the area of the second terminals T₂ₐ, T_{2b}, T_{2c} of the first three battery cells 1a, 1b, 1c. However, in alternative embodiments, the second protection cover 412 may extend, with respect to the x-direction, along the complete battery cell stack 10. Then, the second protection cover 412 allows for a protection of each of the second terminals T₂ₐ, T_{2b}, ..., T_{2z} of the battery cell stack 10.

Furthermore, the embodiment of the battery module being partly sketched in Figs. 4 and 5 includes a first busbar 31 being connected to any one of the first terminals T₁ₐ, T_{1b}, ..., T_{1z} of the battery cell stack 10 and a second busbar 31 being connected to any one of the second terminals T₂ₐ, T_{2b}, ..., T_{2z} of the battery cell stack 10. In the region of the first three battery cells 1a, 1b, 1c, the first busbar 31 is accommodated in the first cavity C11, while, similarly, the second busbar 32 is accommodated in the second cavity C12. Hence, in the area of the BMM housing 51, the first and second busbar 31, 32 are each also protected by the first and second protection covers 411, 412 from debris expelled from one or more battery cells of the battery cell stack 10 in case of a thermal runaway.

As can be taken from FIG. 5, the upper faces of the base portion 510, the first leg portion 511, and the second leg portion 512 are flush. However, the extension Δz₀ of the base portion 510, with regard to the z-direction, is larger than the extension Δz₁ of the first leg portion 511 as well as larger than the extension Δz₂ of the second leg portion 512. In the shown embodiment, the extension Δz₁ of the first leg portion 511 and the extension Δz₂ of the second leg portion 512 are equal, Δz₁ = Δz₂. By this arrangement, the base portion 510 can be mounted, with its bottom face, at the level of the terminal sides of the battery cells 1a, 1b, ..., 1z and/or at the level of the top side of the first end-plate 21, while the bottom faces of the first leg portion 511 and the second leg portion 512 are each spaced apart, with regard to the z-direction, from the level of the terminal sides of the battery cells 1a, 1b, ..., 1z. The distance between the level of the terminal sides of the battery cells 1a, 1b, ..., 1z and the bottom face of the first leg portion 511 is large enough to accommodate the first protection cover 411 within the space between the terminal sides of the first three battery cells 1a, 1b, 1c and the bottom face of the first leg portion 511. Also, the distance between the level of the terminal sides of the battery cells 1a, 1b, ..., 1z and the bottom face of the second leg portion 512 is large enough to accommodate the second protection cover 412 within the space between the terminal sides of the first three battery cells 1a, 1b, 1c and the bottom face of the second leg portion 512. In the embodiment shown in FIG. 5, the bottom face of the first leg portion 511 abuts against the top face of the first flat portion 411b of the first protection cover 411, and the bottom face of the second leg portion 512 abuts, correspondingly, against the top face of the second flat portion 412b of the second protection cover 412. However, in alternative embodiments, additional clearances may be provided between the top faces of the flat portions 411b, 412b and the bottom faces of the respective leg portions 511, 512.

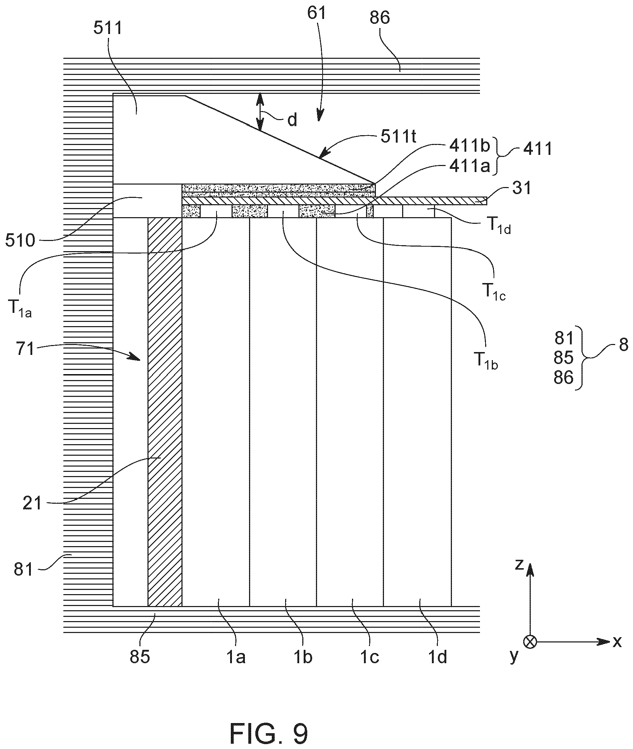

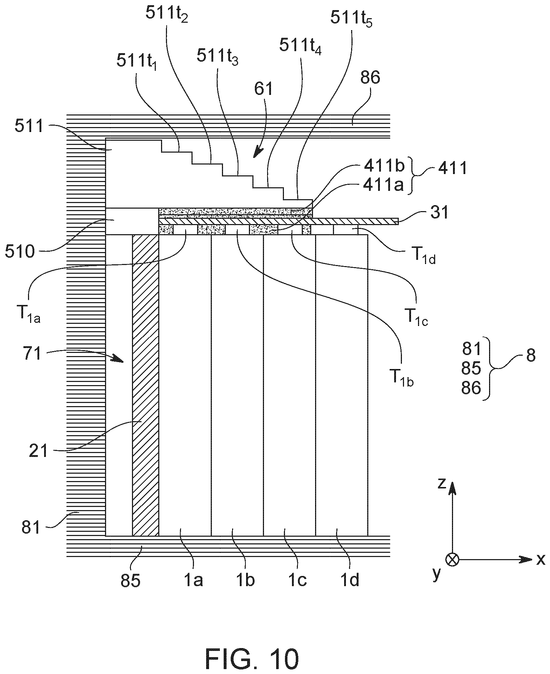

Further, the housing 8 accommodating the battery module of FIG. 5 may include a top wall 86 extending above the BMM housing 51 parallel to the x-y-plane of the coordinate system. In the embodiment illustrated in FIG. 5, the top wall 86 is spaced apart from the top surface of the BMM housing 51 such that a clearance 61 is formed between the top wall 86 and the BMM housing 51. Hence, vent gas and debris expelled from one of the battery cells in the area of the gap G between the first leg portion 511 and the second leg portion 512 may thus escape from the area of the gap G not only into the x-direction but also into and against the y-direction through the clearance 61, which promotes the degassing process. However, in alternative embodiments, the top wall 86 may abut against the top surface of the BMM housing 51. In embodiments, the first leg portion 511 and/or the second leg portion 512 may be formed in a wedge-like shape tapering into the x-direction, which further improves the degassing along the y-direction. This is described in more detail below with reference to Figs. 9 and 10.

In the embodiment of FIG. 5, the top face of the first end-plate 21 may be flush with the terminal sides of the battery cells 1a, 1b, ..., 1z. These terminal sides are also flush with each other. Then, due to the higher level of the bottom side of the first leg portion 511 compared to the top face of the first end-plate 21, a gap is formed between the first end-plate 21 and the first leg portion 511, through which the first busbar 31 can be accessed from the first space 71 formed in front of the first end-plate 21 (see FIG. 2). Hence, high voltage interfaces (not shown) positioned in the first space 71 can be electrically connected, through the before-mentioned gap, with the first busbar 31 (and possibly other devices installed on the terminal sides of the individual battery cells 1a, 1b, ..., 1z such as temperature sensors and the like). Correspondingly, due to the higher level of the bottom side of the second leg portion 512 compared to the top face of first end-plate 21, a further gap is formed between the first end-plate 21 and the second leg portion 512, through which the second busbar 32 can be accessed from the first space 71 formed in front of the first end-plate 21 (see FIG. 2). Hence, high voltage interfaces (not shown) positioned in the first space 71 can be electrically connected, through the before-mentioned gap, with the second busbar 32 (and possibly other devices installed on the terminal sides of the individual battery cells 1a, 1b, ..., 1z such as temperature sensors and the like).

With regard to the y-direction, the BMM housing 51 extends along the complete width of the battery cell stack 10 (corresponding to the extension of each of its battery cells 1a, 1b, ..., 1z with regard to the y-direction as illustrated in FIG. 1). Also, as can be taken from FIG. 5, the front faces (i. e., the faces facing against the x-direction) of the base portion 510, the first leg portion 511, and the second leg portion 512 are flush with regard to the x-direction.

As already described above with reference to Figs. 3 and 4, the base portion 510 is arranged at the front of the first battery cell 1a, when viewing into the x-direction. The extension of the base portion 510 with regard to the x-direction is configured such that it corresponds to the distance of the front side of the first battery cell 1a (i. e., the main side of the first battery cell 1a facing against the x-direction) to the front wall 81 of the housing 8. That is to say, the base portion 510 together with the rear parts of the leg portions 511, 512 cover the gap, along the entire width of the battery cell stack 10 with regard to the y-direction, between the rear side of the first battery cell 1a and the front wall 81, wherein the first and-plate 21 and the first space 71 are located. Hence, the first space 71 is shielded by the BMM housing 51 against debris expelled from the affected battery cells into the space above the battery cell stack 10 during the occurrence of a thermal runaway. Accordingly, high voltage interfaces (and possibly other electrical installations) that may be accommodated in the first space 71 are protected from the debris, and thus, the risk of electric circuits and arcing generated in the voltage interfaces and possibly other electric installations within the first space 71 is avoided or at least largely minimized.

To further prevent debris from entering the first space 71, also the lateral sides of the first space 71 can be closed by lateral plates or barriers (not shown) extending parallel to the x-z-plane of the coordinate system, each of the lateral plates or barriers abutting with one of the lateral sides of the first battery cell 1a of the battery cell stack 10. In such embodiments, the first space 71 is closed from each side, which provides a maximum protection against debris in case of a thermal runaway.

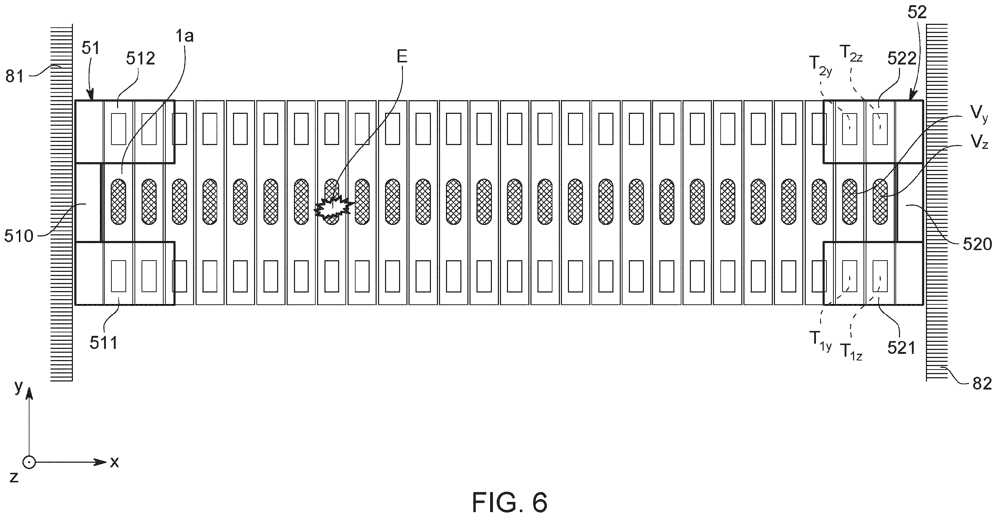

In the embodiment illustrated in FIG. 3, the battery module is equipped only with a single BMM unit and thus with a single BMM housing 51. Hence, only the first space 71 (see FIG. 2) is protected from debris. The second space 72 at the opposite end of the battery cell stack 10, however, is left unprotected in this embodiment. This is not harmful, if no sensitive electrical installations are mounted within the second space 72. However, according to a further embodiment of a battery module according to the present disclosure as schematically illustrated in Figure 6, the battery module is equipped with two BMM units arranged at the opposite ends of the battery module.

The embodiment of FIG. 6 is based on the embodiment of FIG. 3, i. e., the battery module of FIG. 6 includes a battery cell stack 10 with a first end-plate 21 and a second end-plate 22 as shown in FIG. 3 as well as a first BMM unit designed identical to the BMM unit of FIG. 3. Hence, the first BMM unit includes a first BMM housing 51 corresponding to the BMM housing 51 of FIG. 3 and accommodates a first BMM electronics (not shown). However, additionally to the embodiment of FIG. 3, the embodiment of FIG. 6 includes a second BMM unit including a second BMM housing 52 and the second BMM electronics (not shown). The second BMM unit is arranged at the second end of the battery cell stack 10, i. e., the end of the battery cell stack 10 being opposite to the end, where the first BMM unit is installed. The shape of the second BMM housing 52 may be identical to the shape of the first BMM housing 51 (however, being implemented into the battery module in an orientation being rotated by an angle of 180° with regard to an axis parallel to the z-axis of the coordinate system) or may correspond to the shape of the first BMM housing 51 being mirrored (e. g., with regard to a plane parallel to the y-z-plane of the coordinate system).

Accordingly, in the illustrated embodiment, the details of the design of the second BMM housing 52 correspond to those of the design of the first BMM housing 51, which has been described above with reference to Figs. 3 to 5, wherein it has to be noted, however, that the implementation into the battery module is done in a mirrored or rotated manner. That is to say, the second BMM housing 52 includes a second base portion 520, at the lateral sides of which are arranged two leg portions and pointing, from the second base portion 520, against the x-direction. For example, a first leg portion 521 of the second BMM housing 52 protrudes from the second base portion 520 into the region above the first terminal T_{1z} of the last battery cell 1z and the first terminal T_{1y} of the penultimate battery cell 1y of the battery cell stack 10, when viewing into the x-direction. Correspondingly, a second leg portion 522 of the second BMM housing 52 protrudes from the second base portion 520 into the region above the second terminal T_{2z} of the last battery cell 1z and the second terminal T_{2y} of the penultimate battery cell 1y of the battery cell stack 10, when viewing into the x-direction. Furthermore, the second BMM housing 52 extends, along the x-direction, between the rear side of the last battery cell 1z (i. e., the main side of the last battery cell 1z facing into the x-direction) and the rear wall 82 of the housing 8 as described above with reference to FIG. 2. With regard to the z-direction, second BMM housing 52 it is arranged at the same level as the first BMM housing 51. Thus, the second BMM housing 52 covers the second end-plate 22 as well as the void space 72 formed between the second end-plate 22 and the rear wall 82 of the housing 8. Accordingly, high voltage interfaces (and possibly other electrical installations) that may, in embodiments of the battery module, be accommodated in the second space 72 are protected from debris generated by a thermal runaway E occurring in one or more of the battery cells 1a, 1b, ... 1z, and thus, the risk of electric circuits and arcing generated in the voltage interfaces and possibly other electric installations within the first space 72 is avoided or at least largely minimized.

To further prevent debris from entering the first space 72, also the lateral sides of the first space 72 can be closed by lateral plates or barriers (not shown) extending parallel to the x-z-plane of the coordinate system, each of the lateral plates or barriers abutting with one of the lateral sides of the last battery cell 1z of the battery cell stack 10. In such embodiments, the second space 72 is closed from each side, which provides a maximum protection against debris in case of a thermal runaway.

With regard to the z-direction, the distance between the bottom face of the first leg portion 521 of the second BMM housing 52 and the terminal sides of the last battery cell 1z and the penultimate battery cell 1y is configured to be large enough to accommodate the first terminal T_{1z} of the last battery cell 1z and the first terminal T_{1y} of the penultimate battery cell 1y. In embodiments, wherein a first busbar 31 (not shown in FIG. 6) is provided to interconnect the first terminals T₁ₐ, T_{1b}, ..., T_{1z} of the battery cell stack 10, the rear end of the first busbar 31 is also accommodated between the bottom face of the first leg portion 521 of the second BMM housing 52 and the terminal sides of the last battery cell 1z and the penultimate battery cell 1y. Further, in embodiments, a busbar protection (not shown in FIG. 6) may be installed in the region below the bottom face of the first leg portion 521 of the second BMM housing 52 on top of the terminal sides of the last battery cell 1z and the penultimate battery cell 1y. The design and arrangement of this busbar protection correspond to that already described above as to the first busbar protection 411 with reference to Figs. 4 and 5, with the requirement that the arrangement is mirrored with regard to a plane parallel to the y-z-plane and intersecting the center of the battery cell stack 10. In embodiments, wherein the busbar protection for the first terminals extends along the complete battery cell stack 10, the first busbar protection 411 below the first BMM housing 51 is an elongated until the rear end of the battery cell stack 10 such that it also forms the busbar protection below the second BMM housing 52.

Correspondingly, the distance, along the z-direction, between the bottom face of the second leg portion 522 of the second BMM housing 52 and the terminal sides of the last battery cell 1z and the penultimate battery cell 1y is configured to be large enough to accommodate the second terminal T_{2z} of the last battery cell 1z and the first terminal T_{1y} of the penultimate battery cell 1y. In embodiments, wherein a second busbar 32 (not shown in FIG. 6) is provided to interconnect the second terminals T₂ₐ, T_{2b}, ..., T_{2z} of the battery cell stack 10, the rear end of the second busbar 32 is also accommodated between the bottom face of the second leg portion 522 of the second BMM housing 52 and the terminal sides of the last battery cell 1z and the penultimate battery cell 1y. Further, in embodiments, a busbar protection (not shown in FIG. 6) may be installed in the region below the bottom face of the second leg portion 522 of the second BMM housing 52 on top of the terminal sides of the last battery cell 1z and the penultimate battery cell 1y. The design and arrangement of this busbar protection correspond to that already described above as to the second busbar protection 412 with reference to Figs. 4 and 5, with the requirement that the arrangement is mirrored with regard to a plane parallel to the y-z-plane and intersecting the center of the battery cell stack 10. In embodiments, wherein the busbar protection for the second terminals extends along the complete battery cell stack 10, the second busbar protection 412 below the first BMM housing 51 is an elongated until the rear end of the battery cell stack 10 such that it also forms the busbar protection below the second BMM housing 52.

In a battery system including two or more battery modules as described before with reference to Figs. 3 to 6, the module connectors or stack connectors connecting two adjacent modules or battery cell stacks may be prone to hot debris deposition, since these module connectors or stack connectors are not protected by the BMM housings as described before. Hence, with the hot venting material depositing on these module connectors or stack connectors, there is an arcing potential, as soon as the isolation of the module connectors or stack connectors is burnt away.

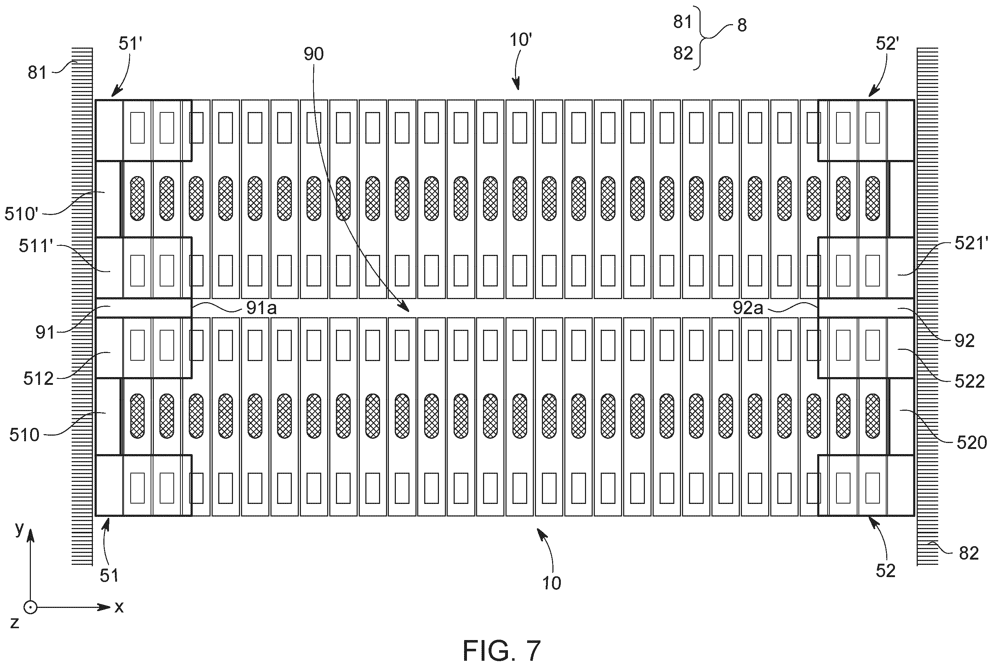

Therefore, two U-shaped BMM housings arranged adjacent to each other can be connected between the respective battery cell stacks via a connection plate. Then, the connection plate covers the stack connector as well as a gap (or possibly a cross beam of the battery pack frame) between the battery cell stacks. An example for such an arrangement is illustrated in Figure 7, showing a battery system including a first battery module and a second battery module. The first battery module is designed identical to the battery module depicted in FIG. 6 and includes a first battery cell stack 10 equipped with a first BMM housing 51 arranged at its front end, as viewed into the x-direction, and a second BMM housing 52 arranged at its second end. The second battery module is also designed identical to the battery module depicted in FIG. 6 and includes a second battery cell stack 10' equipped with a further first BMM housing 51' arranged at its front end, as viewed into the x-direction, and a further second BMM housing 52' arranged at its second end. The first battery module and the second battery module are arranged in parallel and accommodated within the common housing 8 including a front wall 81 and the rear wall 82. The placing of each of the first and second battery module between the front wall 81 and the rear wall 82 corresponds to that being illustrated with reference to FIG. 6.

As can be taken from FIG. 7, a first connection plate 91 bridges a gap 90 between the first battery cell stack 10 and the second battery cell stack 10' in the region of the front ends of the battery modules. The first connection plate 91 extends between the second leg portion 512 of the first BMM housing 51 of the first battery module and the first leg portion 511' of the further first BMM housing 51' of the second battery module. Hence, module connectors or stack connectors (not shown) positioned below the first connection plate 91 (when viewing against the z-direction) and connecting the first battery module with the second battery module are protected from debris ejected from one or more of the battery cells of the battery system in case of the thermal runaway.

Correspondingly, a second connection plate 92 bridges the gap 90 between the first battery cell stack 10 and the second battery cell stack 10' in the region of the rear ends of the battery modules. The second connection plate 92 extends between the second leg portion 522 of the second BMM housing 52 of the first battery module and the first leg portion 521' of the further second the BMM housing 51' of the second battery module. Hence, module connectors or stack connectors (not shown) positioned below the second connection plate 92 (when viewing against the z-direction) and connecting the first battery module with the second battery module are protected from debris ejected from one or more of the battery cells of the battery system in case of the thermal runaway.

The shielding of module connectors or stack connectors arranged in the area between the first BMM housing 51 and the further first BMM housing 51' below the first connection plate 91 can be further improved, in embodiments, by a connection side plate (not shown) extending parallel to the y-z-plane of the coordinate system so as to bridge, along the y-direction, the gap between the first battery cell stack 10 and the second battery cells deck 10' and, along the z-direction, between the rear end 91a of the first connection plate 91 and the bottom wall (not shown in FIG. 7) of the housing 8. Further, the shielding of module connectors or stack connectors arranged in the area between the second BMM housing 52 and the further second BMM housing 52' below the second connection plate 92 can be further improved, in embodiments, by a further connection side plate (not shown) extending parallel to the y-z-plane of the coordinate system so as to bridge, along the y-direction, the gap between the first battery cell stack 10 and the second battery cells deck 10' and, along the z-direction, between the front end 92a of the second connection plate 92 and the bottom wall (not shown in FIG. 7) of the housing 8.

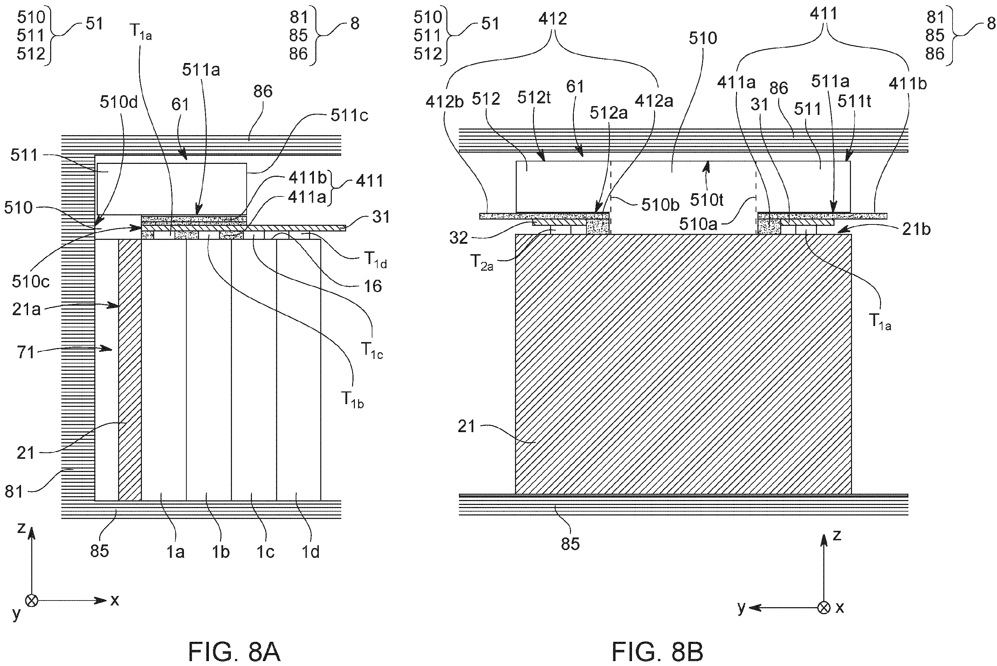

Figure 8A schematically illustrates a side view of an end portion of an embodiment of a battery module according to the present disclosure. Figure 8B schematically shows the same end portion seen in a front view. The end portion shown in FIG. 8 may correspond to the first end portion (i. e., the end portion pointing against the x-direction) of one of the embodiments of a battery module described with reference to Figs. 3 to 6. Additionally, in FIG. 8 is a housing 8, in which the battery module is accommodated to form a battery system. The housing 8 includes, as far as shown in FIG. 8, a front wall 81, a bottom wall 85, and a top wall 86. Depicted in FIG. 8A are the first four battery cells 1a, 1b, 1c, 1d of a battery cell stack that is confined, at its first end, by a first end-plate 21. Each of the battery cells 1a, 1b, 1c, 1d and the first end-plate 21 is placed on the bottom wall 85 of the housing 8 and extends, in the z-direction, up to the same height such that the upper sides 16 of the battery cells as well as the top face of the first end-plate 21 are flush. As can be further seen in FIG. 8A, a void space 71 is left between the front wall 81 of the housing 8 and a front face 21a of the first and-plate 21. Within the space 71, high voltage interfaces (not shown) may be accommodated.

A BMM unit is arranged on top of the battery cell stack in the region of its first end. The BMM unit includes a BMM electronics (not shown) and a BMM housing 51. The BMM housing 51 includes a base portion 510, a first leg portion 511, and a second leg portion 512. According to the embodiment shown in FIG. 8, the base portion 510 is mounted on the top face 21b of the first end-plate 21. The first leg portion 511 is arranged at a lateral side 510a of the base portion 510 facing against the y-direction, while the second leg portion 512 is arranged at an opposite lateral side 510b of the base portion 510 facing into the y-direction. With regard to the x-direction, the first leg portion 511 and the second leg portion 512 each extend into a region above the third battery cell 1c of the battery cell stack. Against the x-direction, each of the base portion 510, the first leg portion 511, and the second leg portion 512 protrude over the front face 21a of the first end-plate 21 so as to abut against the front wall 81 of the housing 8. Accordingly, the space 71 between the front wall 81 and the first end-plate 21 is covered by the BMM housing 51.

As can be seen in FIG. 8A, a first busbar 31 extends along the x-direction and is electrically connected to each of the first terminals T₁ₐ, T_{1b}, T_{1c}, T_{1d} of the battery cells 1a, 1b, 1c, 1d. The first busbar 31 may also be electrically connected to the first terminals of each of the remaining battery cells of the battery cell stack, which are, however, not visible in FIG. 8A. Correspondingly, a second busbar 32 is electrically connected to each of the second terminals of the battery cell stack, which is visible in FIG. 8B with respect to the second terminal T₂ₐ of the first battery cell 1a, as used in the stack direction (x-direction).

In the region of the first battery cell 1a and the second battery cell 1b (and possibly also the region of the third battery cell 1c), the first busbar 31 is shielded by a first protection cover 411, and the second busbar 32 is shielded by a second protection cover 412. The first protection cover 411 includes a first pedestal part 411a and a first flat part 411b. The first pedestal part 411a is mounted on top of the terminal sides of first battery cell 1a and the second battery cell 1b and partly also on top of the terminal side of the third battery cell 1c in a region between, with regard to the y-direction, the first busbar 31 and a center of these battery cells 1a, 1b, 1c. The first flat part 411b it is arranged on top of the first pedestal part 411a and protrudes from there, against the y-direction, above the first busbar 31 so as to cover the first busbar 31. The second protection cover 412 includes a second pedestal part 412a and a second flat part 412b. The second pedestal part 412a is mounted on top of the terminal sides of first battery cell 1a and the second battery cell 1b and partly also on top of the terminal side of the third battery cell 1c in a region between, with regard to the y-direction, the second busbar 32 and a center of these battery cells 1a, 1b, 1c. The second flat part 412b it is arranged on top of the second pedestal part 412a and protrudes from there, into the y-direction, above the second busbar 32 so as to cover the second busbar 32.

In the embodiment of FIG. 8A, the first protection cover 411 extends, with respect to the x-direction, between a rear face 510c of the base portion 510 and a rear face 511c of the first leg portion 511. However, in alternative embodiments, the first protection cover 411 may extend against the x-direction into the region of the base portion 510 (e. g., up to a front face 510d of the base portion 510) and/or in the x-direction into the region behind the rear face 511c of the first leg portion 511. In embodiments, this may apply correspondingly to the second protection cover 412.

The first busbar 31 is arranged below the first leg portion 511. In the embodiment shown in FIG. 8, the top surface of the first busbar 31 abuts against a bottom face 511a of the first leg portion 511. In alternative embodiments, there may be left the clearance between the top surface of the first busbar 31 and the bottom face 511a of the first leg portion 511. Further, the second busbar 32 is arranged below the second leg portion 512. In the embodiment shown in FIG. 8, a top surface of the second busbar 32 abuts against a bottom face 512a of the second leg portion 512. In alternative embodiments, there may be left the clearance between the top surface of the second busbar 32 and the bottom face 512a of the first leg portion 512.

In the embodiment of FIG. 8, the top face 510t of the base portion 510, the top face 511t of the first leg portion 511, and the top face 512t of the second leg portion 512 are flush. However, due to the gaps, along the z-direction, between the level of the terminal sides of the battery cells 1a, 1b, 1c and the level of the bottom faces 511a, 512a of the first and second legs 511, 512, the extension of the base portion 510 along the z-direction is larger than each of the extension of the first leg portion 511 and the extension of the second leg portion 512 along the z-direction. Hence, the base portion 510 protrudes between the first and second select portions 511, 512 against the z-direction up to the top surface 21b of the first end-plate 21.

The top wall 86 of the housing 8 extends, parallel to the x-y-plane of the coordinate system, above the BMM housing 51. A clearance 61 may be left between the top of the BMM housing 51 and the top wall 86, as illustrated in FIG. 8. Through the clearance 61, the vent gas and debris can escape from the region between the first and second leg portions 511, 512 in a direction perpendicular to the stack direction. However, in other embodiments, the top of the BMM housing 51 may abut against the top wall 86 of the housing 8. In such embodiments, the first and second leg portions 511, 512 may be shaped differently to allow for an escape of debris in direction is perpendicular to the stack direction. Such embodiments will be described below with reference to Figs. 9 and 10.

In the embodiment shown in FIG. 8, the top face 21b of the first end-plate 21 is flush with the terminal sides 16 of the battery cells 1a, 1b, 1c, 1d. In alternative embodiments, however, the top face 21b of the first end-plate 21 may be arranged, with regard to the z-direction, on a level different from the level of the battery cells 1a, 1b, 1c, 1d. In such embodiments, the extension of the base portion 510 along the z-direction may be shortened or lengthened accordingly correspondingly such that the base portion 510 may still be mounted onto the front face 21a of the first end-plate 21 and extend to the level of the top faces of the first and second leg portions 511, 512.

In the embodiment shown in Figs. 4, 5, and 8, the base portion 510 as well as the first leg portion 511 and the second leg portion 512 each have a cuboid shape. However, it is understood that other shapes can be used. For example, Figure 9 shows schematically an end portion of an embodiment of a battery module according to the present disclosure, which largely corresponds to the end portion illustrated before in FIG. 8. However, in the embodiment of FIG. 9, the first leg portion 511 is shaped in a wedge-like manner, thereby continuously tapering into the stack direction (x-direction). Hence, a distance D between a top surface 511t of the first leg portion 511 and the top wall 86 of the housing 8 becomes larger into the x-direction. By this arrangement, a clearance 61 having likewise a wedge-like shape is formed between the first leg portion 511 and the top wall 86, through which vent gas and hot debris expelled from one or more battery cells arranged in the region below the leg portions of the BMM housing 511 can escape away from the battery cell stack against the y-direction. The second get portion 512 (not shown in FIG. 9) may be formed in a manner corresponding to that of the first leg portion 511. Accordingly, a wedge-shaped clearance is also formed between the second leg portion 512 and the top wall 86 of the housing 8, through which vent gas and hot debris expelled from one or more battery cells arranged in the region below the leg portions of the BMM housing 511 can escape away from the battery cell stack into the y-direction. In a top view, the embodiment of the BMM housing 51 shown in FIG. 9 may have a shape similar to the shape of the first BMM housing 51 as shown in Figs. 3, 4, and 6. Seen in the x-direction, the shape of the BMM housing 51 of FIG. 9 maybe similar to the shape of the BMM housing shown in FIG. 8B.

Figure 10 schematically provides an end portion of a further embodiment of a battery module according to the present disclosure, which is rather similar to the embodiment described before with reference to FIG. 9. In the embodiment of FIG. 10, the first leg portion 511 is shaped in a wedge-like manner, thereby tapering into the x-direction. In contrast to the embodiment of FIG. 9, however, the taper is not shaped in a continuous manner but formed by a plurality of steps 511t₁, 511t₂, 511t3, 511t₄, 511t₅. Again, a clearance 61 having a corresponding wedge-like shape (but tapering, of course, against the x-direction) is formed between the first leg portion 511 and the top wall 86 of the housing 8. The effect of the clearance 61 in the embodiment of FIG. 10 corresponds to the effect of the clearance 61 in the embodiment of FIG. 10, i. e., it allows for a in improved ventilation of the battery cells 1a, 1b, 1c in the region between the first leg portion 511 and the second leg portion 512. In the embodiment of FIG. 10, the second leg portion 512 (not shown) may be formed in a manner corresponding to that of the first leg portion 511. In a top view, the embodiment of the BMM housing 51 shown in FIG. 10 may have a shape similar to the shape of the first BMM housing 51 as shown in Figs. 3, 4, and 6. Seen in the x-direction, the shape of the BMM housing 51 of FIG. 10 maybe similar to the shape of the BMM housing shown in FIG. 8B.

The embodiments illustrated in Figs. 9 and 10 provide an optimal gas flow perpendicular to the stack direction in the area of the BMM housing 51, which is particularly advantageous for ventilating the first battery cell 1c.
In the afore-described embodiments of the battery module according to the present disclosure, end-plates 21, 22 have been used to confine the battery cell stack along the stack direction. However, in other embodiments of the battery module according to the disclosure, one or both of the first end-plate 21 and the second and-plate 22 may be omitted. In such embodiments, the BMM housing may be fixated, e. g., on the terminal sides of a first group of battery cells or on top of busbar protections similar to the ease of Figs. 8 to 10. Alternatively, the BMM housing may be fixated at the housing 8, wherein the battery cell stack is accommodated.

### Reference signs

- 1: battery cell
- 1': case
- 1a, 1b, 1c, 1d, 1h, 1y, 1z: battery cells
- 8: housing of a battery system
- 10, 10': battery cell stack
- 12: main side
- 13: lateral side
- 16: terminal side
- 21: first end-plate
- 21a: front face of first end-plate
- 21b: top face of first end-plate
- 22: second end-plate
- 31, 32: busbars
- 51, 51', 52, 52': battery module management housings
- 61: clearance
- 71, 72: spaces
- 81: front wall
- 82: rear wall
- 85: bottom wall
- 86: top wall
- 91: first connection plate
- 91a: rear end of first connection plate
- 92: second connection plate
- 92a: front end of first connection plate
- 411: first protection cover
- 411a: first pedestal part
- 411b: first flat part
- 412: second protection cover
- 412a: second pedestal part
- 412b: second flat part
- 510, 510': base portion
- 510a, 510b, 510c, 510d, 510t: faces of the base portion
- 510t₁, 510t₂, 510t₃, 510t₄, 510t₅: steps
- 511, 511': first leg portion
- 511a, 511c, 511t: surfaces of first leg portion
- 512: second leg portion
- 512a, 512t: faces of second leg portion
- 520: second base portion
- 521, 521': first leg portion of second base portion
- 522: second leg portion of second base portion
- A-A: virtual intersection
- C1, C1: cavities
- Δz₀, Δz₁, Δz₂: extensions along the z-direction
- d: distance
- E: thermal event such as a thermal runaway
- G: gap
- T1: first terminal
- T₁ₐ, T_{1b}, T_{1c}, T_{1d}, T_{1y}, T_{1z}: first terminals
- T2: second terminal
- T₂ₐ, T_{2b}, T_{2c}, T_{2d}, T_{2y}, T_{2z}: second terminals
- V: venting outlet
- Vₐ, V_{b}, V_{c}, V_{y}, V_{z}: venting outlets
- x, y, z: axes of a Cartesian coordinate system

## Claims

1. A battery module, comprising:
a battery cell stack (10) with a plurality of battery cells (1a, 1b, ..., 1z) stacked along a first direction (x); and
a first battery module management unit comprising a first battery module management housing (51);
wherein each of the battery cells (1a, 1b, ..., 1z) comprises a case (1') with a terminal side (16) comprising a first terminal (T₁), a second terminal (T₂), and a venting outlet (V) arranged between the first terminal (T₁) and the second terminal (T₂);
wherein the first battery module management housing (51) comprises a base portion (510), a first leg portion (511), and a second leg portion (512);
wherein the base portion (510) is arranged in front of the first battery cell (1a) of the battery cell stack (10) when viewing into the first direction (x);
wherein the first leg portion (511) protrudes from the base portion (510) into the first direction (x) and covers one or more of the first terminals (T₁ₐ, T_{1b});
wherein the second leg portion (512) protrudes from the base portion (510) into the first direction (x) and covers one or more of the second terminals (T₂ₐ, T_{2b});
wherein a gap (G) is formed between the first leg portion (511) and the second leg portion (512); and
wherein each of the venting outlets (V) being positioned, along the first direction (x), in the area of the first leg portion (511) and the second leg portion (512) are positioned in the gap (G).

2. The battery module as claimed in claim 1, wherein the first leg portion (511) and the second leg portion (512) have the same extension with regard to the first direction (x).

3. The battery module as claimed in claim 1 or 2,
further comprising a first end-plate (21), the first end-plate (21) being arranged, when viewing into the first direction (x), in front of the first battery cell (1a) and being configured to support the first battery cell (1a) with respect to the first direction (x); and/or
further comprising a second end-plate (22), the second end-plate (22) being arranged, when viewing into the first direction (x), behind the last battery cell (1z) and being configured to support the last battery cell (1z) against the first direction (x).

4. The battery module as claimed in claim 3,
wherein the first end-plate (21) has a prismatic shape; and
wherein the base portion (510) of the first battery module management housing (51) is arranged on a top face (21b) of the first end-plate (21), the top face (21b) facing into a direction (z) perpendicular to the terminal sides (16) of the battery cells (1a, 1b, ..., 1z).

5. The battery module as claimed in any one of claims 1 to 4,
wherein, with regard to a direction (z) perpendicular to the terminal sides (16) of the battery cells (1a, 1b, ..., 1z), a first cavity is formed between the first leg portion (511) and the battery cell stack (10), and the first terminals (T₁ₐ, T_{1b}) covered by the first leg portion (511) are arranged in the first cavity; and/or
wherein, with regard to a direction (z) perpendicular to the terminal sides (16) of the battery cells (1a, 1b, ..., 1z), a second cavity is formed between the second leg portion (512) and the battery cell stack (10), and the second terminals (T₂ₐ, T_{2b}) covered by the second leg portion (512) are arranged in the second cavity.

6. The battery module as claimed in any one of claims 1 to 5,
wherein the first leg portion (511) has a wedge-shaped form tapering in the first direction (x) such that a distance between the battery cell stack (10) and a top face (511t) of the first leg portion (511) becomes smaller, when viewing into the first direction (x); and/or
wherein the second leg portion (512) has a wedge-shaped form tapering in the first direction (x) such that a distance between the battery cell stack (10) and a top face (512t) of the second leg portion (512) becomes smaller, when viewing into the first direction (x).

7. The battery module as claimed in any one of claims 1 to 6, further comprising a first busbar (31) electrically connected to each of the first terminals (T₁ₐ, T_{1b}, ..., T_{1z}), the first busbar (31) being covered, at least in the area of the first leg portion (511), by a first protection cover (411).

8. The battery module as claimed in claim 7, wherein the first protection cover (411) comprises:
a first pedestal part (411a) mounted on the terminal sides (16) of at least the battery cells (1a, 1b) covered by the first leg portion (511) and extending, along the first direction (x), in a region between the first terminals (T₁ₐ, T_{1b}) and the venting outlets (Vₐ, V_{b}) of at least the battery cells (1a, 1b) covered by the first leg portion (511); and
a first flat part (411b) arranged on the first pedestal part (411a) and extending between the first leg portion (511) and at least the battery cells (1a, 1b) covered by the first leg portion (511).

9. The battery module as claimed in any one of claims 1 to 8, further comprising a second busbar (32) electrically connected to each of the second terminals (T₂ₐ, T_{2b}, ..., T_{2z}), the second busbar (32) being covered, at least in the area of the second leg portion (512), by a second bus bar protection (412).

10. The battery module as claimed in claim 9, wherein the second protection cover (412) comprises:
a second pedestal part (412a) mounted on the terminal sides (16) of at least the battery cells (1a, 1b) covered by the second leg portion (512) and extending, along the first direction (x), in a region between the second terminals (T₂ₐ, T_{2b}) and the venting outlets (Vₐ, V_{b}) of at least the battery cells (1a, 1b) covered by the second leg portion (512); and
a second flat part (412b) arranged on the second pedestal part (412a) and extending between the second leg portion (512) and at least the battery cells (1a, 1b) covered by the second leg portion (512).

11. The battery module as claimed in any one of claims 1 to 10,
further comprising a second battery module management unit;
wherein the second battery module management unit comprises a second battery module management housing (52);
wherein the second battery module management housing (52) comprises a further base portion (520), a further first leg portion (521), and a further second leg portion (522);
wherein the further base portion (520) is arranged behind the last battery cell (1z) of the battery cell stack (10), when viewing into the first direction (x);
wherein the further first leg portion (521) protrudes from the further base portion (520) against the first direction (x) and covers one or more of the first terminals (T_{1y}, T_{1z});
wherein the further second leg portion (522) protrudes from the further base portion (520) against the first direction (x) and covers one or more of the second terminals (T_{2y}, T_{2z});
wherein a further gap is formed between the further first leg portion (521) and the further second leg portion (522); and
wherein each of the venting outlets (V) being positioned, along the first direction (x), in the area of the further first leg portion (521) and the further second leg portion (522) are positioned in the further gap.

12. A battery system comprising one or more battery modules as claimed in any one of claims 1 to 11.

13. The battery system as claimed in claim 12,
further comprising a battery system housing (8), the battery system housing (8) accommodating each of the battery modules;
wherein the stack directions of the battery cell stacks (10, 10') of the battery modules are oriented parallel to each other, each of the battery cell stacks (10, 10') having a first end pointing against the stack direction and a second end pointing into the stack direction;
wherein the battery system housing (8) comprises a front wall (81) extending perpendicular to the stack direction, and a rear wall (82) extending perpendicular to the stack direction;
wherein, for each of the battery cell stacks (10, 10'), a first space (71) is formed between the first end of the battery cell stack (10, 10') and the front wall (81), and a second space (72) is formed between the second end of the battery cell stack (10, 10') and the rear wall (82);
wherein each of the battery module management housings (51, 51') arranged at the first ends of the battery modules abuts against the front wall (81) so as to cover the respective first space (71); and
wherein, as far as at least one of the battery modules is a battery module according to claim 11, each of the second battery module management housings (52, 52') arranged at the second ends of the battery modules abuts against the rear wall (82) so as to cover the respective second space (72).

14. The battery system as claimed in claim 13,
wherein any two battery module management housings (51, 51'; 52, 52') being arranged adjacent to each other with respect to a direction perpendicular to the stack direction of the battery cell stacks (10, 10') are connected to each other with a connection plate (91; 91').

15. A vehicle comprising at least one battery module as claimed in any one of claims 1 to 11 and/or at least one battery system as claimed in claims 12 to 14.

## Amended claims

### Amended claims in accordance with Rule 137(2) EPC.

1. A battery module, comprising:
a battery cell stack (10) with a plurality of battery cells (1a, 1b, ..., 1z) stacked along a first direction (x); and
a first battery module management unit comprising a first battery module management electronics accommodated in a first battery module management housing (51);
wherein each of the battery cells (1a, 1b, ..., 1z) comprises a case (1') with a terminal side (16) comprising a first terminal (T₁), a second terminal (T₂), and a venting outlet (V) arranged between the first terminal (T₁) and the second terminal (T₂);
wherein the first battery module management housing (51) comprises a base portion (510), a first leg portion (511), and a second leg portion (512);
wherein the base portion (510) is arranged in front of the first battery cell (1a) of the battery cell stack (10) when viewing into the first direction (x);
wherein each of the first leg portion (511) and the second leg portion (512) protrudes from the base portion (510) into the first direction (x);
wherein a gap (G) is formed between the first leg portion (511) and the second leg portion (512);
**characterized in that**:
each of the base portion (510), the first leg portion (511), and the second leg portion (512) comprises a cavity accommodating at least a part of the first battery module management electronics;
the first leg portion (511) covers one or more of the first terminals (T₁ₐ, T_{1b});
the second leg portion (512) covers one or more of the second terminals (T₂ₐ, T_{2b}); and
wherein each of the venting outlets (V) being positioned, along the first direction (x), in the area of the first leg portion (511) and the second leg portion (512) are positioned in the gap (G).

2. The battery module as claimed in claim 1, wherein the first leg portion (511) and the second leg portion (512) have the same extension with regard to the first direction (x).

3. The battery module as claimed in claim 1 or 2,
further comprising a first end-plate (21), the first end-plate (21) being arranged, when viewing into the first direction (x), in front of the first battery cell (1a) and being configured to support the first battery cell (1a) with respect to the first direction (x); and/or
further comprising a second end-plate (22), the second end-plate (22) being arranged, when viewing into the first direction (x), behind the last battery cell (1z) and being configured to support the last battery cell (1z) against the first direction (x).

4. The battery module as claimed in claim 3,
wherein the first end-plate (21) has a prismatic shape; and
wherein the base portion (510) of the first battery module management housing (51) is arranged on a top face (21b) of the first end-plate (21), the top face (21b) facing into a direction (z) perpendicular to the terminal sides (16) of the battery cells (1a, 1b, ..., 1z).

5. The battery module as claimed in any one of claims 1 to 4,
wherein, with regard to a direction (z) perpendicular to the terminal sides (16) of the battery cells (1a, 1b, ..., 1z), a first cavity is formed between the first leg portion (511) and the battery cell stack (10), and the first terminals (T₁ₐ, T_{1b}) covered by the first leg portion (511) are arranged in the first cavity; and/or
wherein, with regard to a direction (z) perpendicular to the terminal sides (16) of the battery cells (1a, 1b, ..., 1z), a second cavity is formed between the second leg portion (512) and the battery cell stack (10), and the second terminals (T₂ₐ, T_{2b}) covered by the second leg portion (512) are arranged in the second cavity.

6. The battery module as claimed in any one of claims 1 to 5,
wherein the first leg portion (511) has a wedge-shaped form tapering in the first direction (x) such that a distance between the battery cell stack (10) and a top face (511t) of the first leg portion (511) becomes smaller, when viewing into the first direction (x); and/or
wherein the second leg portion (512) has a wedge-shaped form tapering in the first direction (x) such that a distance between the battery cell stack (10) and a top face (512t) of the second leg portion (512) becomes smaller, when viewing into the first direction (x).

7. The battery module as claimed in any one of claims 1 to 6, further comprising a first busbar (31) electrically connected to each of the first terminals (T₁ₐ, T_{1b}, ..., T_{1z}), the first busbar (31) being covered, at least in the area of the first leg portion (511), by a first protection cover (411).

8. The battery module as claimed in claim 7, wherein the first protection cover (411) comprises:
a first pedestal part (411a) mounted on the terminal sides (16) of at least the battery cells (1a, 1b) covered by the first leg portion (511) and extending, along the first direction (x), in a region between the first terminals (T₁ₐ, T_{1b}) and the venting outlets (Vₐ, V_{b}) of at least the battery cells (1a, 1b) covered by the first leg portion (511); and
a first flat part (411b) arranged on the first pedestal part (411a) and extending between the first leg portion (511) and at least the battery cells (1a, 1b) covered by the first leg portion (511).

9. The battery module as claimed in any one of claims 1 to 8, further comprising a second busbar (32) electrically connected to each of the second terminals (T₂ₐ, T_{2b}, ..., T_{2z}), the second busbar (32) being covered, at least in the area of the second leg portion (512), by a second bus bar protection (412).

10. The battery module as claimed in claim 9, wherein the second protection cover (412) comprises:
a second pedestal part (412a) mounted on the terminal sides (16) of at least the battery cells (1a, 1b) covered by the second leg portion (512) and extending, along the first direction (x), in a region between the second terminals (T₂ₐ, T_{2b}) and the venting outlets (Vₐ, V_{b}) of at least the battery cells (1a, 1b) covered by the second leg portion (512); and
a second flat part (412b) arranged on the second pedestal part (412a) and extending between the second leg portion (512) and at least the battery cells (1a, 1b) covered by the second leg portion (512).

11. The battery module as claimed in any one of claims 1 to 10,
further comprising a second battery module management unit;
wherein the second battery module management unit comprises a second battery module management housing (52);
wherein the second battery module management housing (52) comprises a further base portion (520), a further first leg portion (521), and a further second leg portion (522);
wherein the further base portion (520) is arranged behind the last battery cell (1z) of the battery cell stack (10), when viewing into the first direction (x);
wherein the further first leg portion (521) protrudes from the further base portion (520) against the first direction (x) and covers one or more of the first terminals (T_{1y}, T_{1z});
wherein the further second leg portion (522) protrudes from the further base portion (520) against the first direction (x) and covers one or more of the second terminals (T_{2y}, T_{2z});
wherein a further gap is formed between the further first leg portion (521) and the further second leg portion (522); and
wherein each of the venting outlets (V) being positioned, along the first direction (x), in the area of the further first leg portion (521) and the further second leg portion (522) are positioned in the further gap.

12. A battery system comprising one or more battery modules as claimed in any one of claims 1 to 11.

13. The battery system as claimed in claim 12,
further comprising a battery system housing (8), the battery system housing (8) accommodating each of the battery modules;
wherein the stack directions of the battery cell stacks (10, 10') of the battery modules are oriented parallel to each other, each of the battery cell stacks (10, 10') having a first end pointing against the stack direction and a second end pointing into the stack direction;
wherein the battery system housing (8) comprises a front wall (81) extending perpendicular to the stack direction, and a rear wall (82) extending perpendicular to the stack direction;
wherein, for each of the battery cell stacks (10, 10'), a first space (71) is formed between the first end of the battery cell stack (10, 10') and the front wall (81), and a second space (72) is formed between the second end of the battery cell stack (10, 10') and the rear wall (82);
wherein each of the battery module management housings (51, 51') arranged at the first ends of the battery modules abuts against the front wall (81) so as to cover the respective first space (71); and
wherein, as far as at least one of the battery modules is a battery module according to claim 11, each of the second battery module management housings (52, 52') arranged at the second ends of the battery modules abuts against the rear wall (82) so as to cover the respective second space (72).

14. The battery system as claimed in claim 13,
wherein any two battery module management housings (51, 51'; 52, 52') being arranged adjacent to each other with respect to a direction perpendicular to the stack direction of the battery cell stacks (10, 10') are connected to each other with a connection plate (91; 91').

15. A vehicle comprising at least one battery module as claimed in any one of claims 1 to 11 and/or at least one battery system as claimed in claims 12 to 14.
